# EUROPÄISCHE PATENTSCHRIFT

(11) **EP 0 506 795 B1**
(45) Veröffentlichungstag und Bekanntmachung des Hinweises auf die Patenterteilung: **17.08.1994**
(21) Anmeldenummer: 91901725.1
(22) Anmeldetag: 19.12.1990
(51) Int. Cl.: H04Q 7/04

(54) **FUNKKOMMUNIKATIONSNETZ AUF BASIS DIGITALER ORTSVERMITTLUNGSSTELLEN**
RADIO COMMUNICATION SYSTEM BASED ON DIGITAL LOCALISATION POINTS
RESEAU DE RADIOCOMMUNICATION SUR LA BASE DE BUREAUX CENTRAUX URBAINS A COMMANDE NUMERIQUE

(30) Priorität: 22.12.1989 AT 2924/89
(43) Veröffentlichungstag der Anmeldung: 07.10.1992
(73) Patentinhaber: Siemens Aktiengesellschaft Österreich, 1210 Wien (AT); SIEMENS AKTIENGESELLSCHAFT, 80333 München (DE)
(72) Erfinder: LECHNER, Robert, Dipl.-Ing., A-3071 Böheimkirchen (AT); FORER, Josef, Dipl.-Ing., A-1060 Wien (AT)
(74) Vertreter: Fuchs, Franz-Josef, Dr.-Ing.
(86) Internationale Anmeldenummer: EP9002258
(87) Internationale Veröffentlichungsnummer: WO9110333

(56) Entgegenhaltungen:
- EP-A- 0 201 126
- EP-A- 0 304 998
- WO-A-86/06915

## Beschreibung

Die Erfindung betrifft ein Funkkommunikationsnetz auf Basis digitaler Ortsvermittlungsstellen, die digitale Teilnehmerleitungseinheiten mit digitalen Teilnehmeranschlußbaugruppen enthalten, an die Teilnehmerleitungen mit teilnehmerseitigen Netzabschlußeinheiten angeschlossen sind, wobei jede Netzabschlußeinheit mit einer Teilnehmeranschlußbaugruppe über die Teilnehmerleitung mit einem Datenkanal verbunden ist und die Datenkanäle in der Ortsvermittlungsstelle auf einen oder mehrere Summendatenkanäle konzentriert sind, wobei die Summendatenkanäle über ein Datennetz mit einer Datenverarbeitungsanlage eines Dienst-Anbieters verbunden sind.

Mit derartigen Kommunikationsanlagen werden "Intelligente Netze" bzw. das Mobiltelefon-C-Netz aufgebaut. Intelligente Netze bilden auch die Basis für die Errichtung zukünftiger Zellular-Funknetze. Sie ermöglichen die Einbindung von Dienst-Anbietern in das herkömmliche Telefonnetz. Konzepte sind beispielsweise im telcom report, 1989, Heft 4 (Seite 102 - 105) bzw. Heft 5 (Seite 142 - 145), unter den Titeln "Intelligente Netze - leistungsfähige Basis für zukünftige Dienste" bzw. "Intelligente Netze beschleunigen Einführung neuer Dienste" beschrieben.

ISDN-Vermittlungsstellen werden u.a. auch im telcom-report, März/April 1986, Heft 2, Seite 111 - 117 unter dem Titel "Digitale Teilnehmerleitungseinheit im System EWSD für ISDN-Teilnehmeranschlüsse" beschrieben. Als Verbindung zwischen zwei Teilnehmern werden zwei Sprachkanäle und ein Datenkanal über ein Koppelnetz durchgeschaltet. Der Datenkanal wird für die Teilnehmersignalisierung, sowie für langsame Daten (paketierte Daten einschließlich Telemetriedaten) paketorientiert betrieben. Die Auftrennung der unterschiedlichen Daten erfolgt in der digitalen Teilnehmeranschlußbaugruppe innerhalb einer digitalen Teilnehmer-Leitungseinheit. Die Paketdaten werden über einen p-Kanal zu einer Anschlußbaugruppe geleitet, die Daten der Teilnehmersignalisierung über einen s-Kanal an eine zweite Anschlußbaugruppe. Die Vermittlungsstelle kann u.a. auch mit Datennetzen, beispielsweise einen Paketdatennetz, verbunden sein. Ein derartiges Kommunikationssystem ermöglicht es dem Netzwerkbetreiber, den Teilnehmern verschiedene Sprach- und Datendienste anzubieten.

Aus der WO 86/6915 ist ein System bekannt, mit dem im Bereich einer Nebenstellen-Kommunikationsanlage durch Zwischenschaltung einer eigenen Funkvermittlungstelle ein Funknetz für Schnurlos-Telefone betrieben wird. Die Sprachübertragung erfolgt digital. Dabei können je Feststation Verbindungen mit mehreren Mobilteilen aufgebaut sein. Die Funkvermittlungsstelle kann im Bedarfsfall eine Verbindung von einer Feststation auf eine andere umschalten, bei der eine bessere Übertragungsqualität gegeben ist. Über einen allgemeinen Signalisierungskanal oder einen Zeitschlitz im Sprachkanal werden vermittlungstechnische Informationen ausgetauscht. Es handelt sich daher um ein privates Funktelefonnetz in der Art eines Mobiltelefon-Netzes. Der Benutzerkreis ist auf die wenigen angeschlossenen Mobilteile beschränkt, eine besondere Berechtigungsprüfung findet nicht statt. Die Teilnehmeridentifizierung wird daher im allgemeinen über die Anschlußnummer und eine persönliche Identifikationsnummer des Mobilteiles erfolgen. Die Sprach-Übertragung erfolgt digital.

Der Erfindung liegt die Aufgabe zugrunde, die Mobilität und Erreichbarkeit der Teilnehmer innerhalb eines Intelligenten Netzes durch Funkkommunikation zu erhöhen.

Dies wird gemäß Patentanspruch 1 dadurch erreicht, daß Netzabschlußeinheiten als Schnurlos-Netzabschlußeinheiten einen Funkteil enthalten und eine Schnurlos-Netzabschlußeinheit derart beschaffen ist, daß eine Fernspeisung über die Teilnehmerleitung von der Ortsvermittlungsstelle her erfolgt, daß mehrere Schnurlos-Teilnehmer einer Schnurlos-Netzabschlußeinheit zugeordnet sind, wobei vor dem Durchschalten einer abgehenden Verbindung eine Berechtigungsprüfung vorgenommen wird und bei ankommender Verbindung die jeweilige Rufnummer des entsprechenden Schnurlos-Teilnehmers von der Ortsvermittlungsstelle über den jeweiligen Datenkanal zur Schnurlos-Netzabschlußeinheit übertragen und der Schnurlos-Teilnehmer über Funk gerufen wird, daß zwischen der Schnurlos-Netzabschlußeinheit und der Ortsvermittlungsstelle mehrere Sprachkanäle gleichzeitig schaltbar sind und daß administrative Daten zwischen der Schnurlos-Netzabschlußeinheit und der Datenverarbeitungsanlage des Dienst-Anbieters austauschbar sind.

Das erfindungsgemäße Funkkommunikationsnetz bietet einen drahtlosen Hausanschluß, der Datenverkehr für die Berechtigungsprüfung erfolgt unabhängig von der Teilnehmersignalisierung parallel zum Verbindungsaufbau. Somit ist es für einen Dienst-Anbieter mit einem Zugriff "on-line" auf einen zentralen Speicher (Datenbasis) möglich, eine Berechtigungsprüfung als sogenannte "authentification" unmittelbar im "basic access" durchzuführen. Es sind Dienste mit zentraler Datenerfassung, einem Abwicklungszentrum und/oder einem Verrechnungs- und Administrationszentrum in herkömmliche Kommunikationssysteme integrierbar. Mehrere Dienst-Anbieter können gleiche oder unterschiedliche Dienstnetze betreiben. Herkömmliche Drahtanschlüsse können erhalten bleiben.

Durch das Funknetz werden bereits vorhandene Leitungen besser genutzt, insbesondere der Ausbau in derzeit unterversorgten Gebieten kann rasch und mit geringem Bauaufwand erfolgen. Durch die Fernspeisung kann am Ort der Schnurlos-Netzabschlußeinheit ein Stromnetzanschluß entfallen. Das erleichtert die Aufstellung beispielsweise in gesicherten Kästen auf öffentlichen Grund. Die herkömmliche Telefonleitung wird somit durch eine Funkverbindung von einem Anschlußkasten ersetzt. Das erhöht die Mobilität und Erreichbarkeit der Teilnehmer, und sein Neuanschluß bzw. eine Erweiterung des Dienstangebotes bedarf keiner Neuverkabelung mehr. Über die Funkstrecke können auch Dienste wie Telekopie, Teletex, Fernschreiben oder Datenübertragung neben der herkömmlichen Sprachübertragung angeboten werden.

Zur Erzielung einer höheren Anschlußdichte ist es vorteilhaft, daß in der Ortsvermittlungsstelle mehrere Schnurlos-Teilnehmer einer Schnurlos-Netzabschlußeinheit fest zugeordnet sind. Über die persönliche Identifikationsnummer jedes Teilnehmers kann selektiv gerufen werden. Eine bessere Ausnutzung der Leitungen wird dadurch erreicht, daß in der Ortsvermittlungsstelle ein Sammelanschluß für mehrere Schnurlos-Netzabschlußeinheiten eingerichtet ist. Dadurch kann eine größere Anzahl von Schnurlos-Teilnehmern mit jeder der Schnurlos-Netzabschlußeinheiten abhängig vom Verkehrsaufkommen eine Verbindung aufbauen.

Zur besseren Nutzung von Sonderdiensten, insbesondere durch nationale Postverwaltungen und in der Aufbauphase des Funkkommunikationsnetzes, ist es vorteilhaft, daß die Datenverarbeitungsanlage des Dienst-Anbieters in die Ortsvermittlungsstelle integriert ist.

Beim Aufbau eines "Telepoint"-Systems ist es vorteilhaft, wenn der Schnurlos-Teilnehmer auch im Funkbereich anderer Schnurlos-Netzabschlußeinheiten als der ihm zugeordneten für ankommende Gespräche erreichbar ist. Dies wird dadurch ermöglicht, daß in der Ortsvermittlungsstelle eine Anrufumleitung vorhanden ist, die von einem Schnurlos-Teilnehmer aktiviert wird, wenn er sich im Funkbereich einer anderen Schnurlos-Netzabschlußeinheit befindet. Die Abhörsicherheit und die eindeutige Gebührenzuordnung bleibt wie bei herkömmlichen Schnurlos-Telefonen erhalten. Somit kann das "Telepoint"-System nach ETSI-Standard aufgebaut werden.

Zur Kombination mit der herkömmlichen Technik ist es vorteilhaft, daß für einen Schnurlos-Teilnehmer ein Mobilteil und ein Drahtanschluß vorhanden sind und daß in der Ortsvermittlungsstelle eine automatische Anrufumleitung vom Drahtanschluß zum Mobilteil erfolgt, wenn sich der Teilnehmer am Drahtanschluß nicht meldet oder die Anrufumleitung aktiviert ist. Wird der Mobilteil nur im Bedarfsfall in Betrieb genommen, wird Funkkanalkapazität gespart und der Akku des Mobilteiles nicht durch die ständige Empfangsbereitschaft belastet. Falls man ständig erreichbar sein möchte, wird durch den Mobilteil die Anrufumleitung automatisch weitergeschaltet, wenn der Mobilteil im Funkbereich einer anderen Schnurlos-Netzabschlußeinheit ist.

Ein zweckmäßiger Aufbau ist damit gegeben, daß die Schnurlos-Netzabschlußeinheit den Funkteil, eine Anpassungseinrichtung mit Hochfrequenz-Multiplexsteuerung, einen Leitungsabschlußbaustein, einen Mikrocomputer und eine Fernspeiseeinrichtung enthält. Der Mikrocomputer setzt die Signalisierungsprotokolle der Teilnehmerleitung auf jene der Funkstrecke um und übernimmt die Steuerung des Funkteiles. Für ein Schnurlos- oder Telepoint-System ist es vorteilhaft, daß der Funkteil mit einer Zeit- und/oder Frequenzmultiplexeinrichtung aufgebaut ist. Dadurch wird auch dem DECT-Standard entsprochen und die Versorgung dicht besiedelter Ballungsräume erleichtert. Dadurch, daß die Schnurlos-Netzabschlußeinheit als Gemeinschaftsanschluß ausgebildet ist, kann in der Umstellungsphase des bisherigen Telefonnetzes beispielsweise ein Vierteltelefon in ein digitales Kommunikationssystem integriert werden.

Zur rascheren Einführung des erfindungsgemäßen Funkkommunikationsnetzes ist es vorteilhaft, daß das Netz als integriertes Netz nach dem ISDN-Standard aufgebaut ist, daß die Schnurlos-Netzabschlußeinheit über eine U-Schnittstelle mit der digitalen Teilnehmeranschlußbaugruppe und zur Übertragung der Betriebsdaten bzw. der Berechtigung als p-Daten über einen D-Kanal mit der Teilnehmer-Leitungseinheit verbunden ist und daß die Datenverarbeitungsanlage des Dienst-Anbieters über den Summendatenkanal eines Paketvermittlungsnetzes mit der Ortsvermittlungsstelle verbunden ist. Für die Fernspeisung kann eine Leistung von 1 Watt bis an die Schnurlos-Netzabschlußeinheit übertragen werden. Das reicht aus, um den Funkteil mit der relativ geringen erforderlichen Sendeleistung zur Kommunikation mit Mobilteilen zu versorgen. Bei fester Zuordnung der Schnurlos-Teilnehmer zur Schnurlos-Netzabschlußeinheit wird die s-Signalisierung benutzt. In der Übergangsphase können auch gleichzeitig analoge Drahteilnehmer an das Kommunikationsnetz angeschlossen sein. Mit dem Summendatenkanal wird ein "routing"-Verfahren realisiert. Als Kommunikationsnetz kann auch eine private Nebenstellenanlage nach ISDN-Standard verwendet werden.

Bei Bedarf ist es vorteilhaft, daß auf der Funkstrecke die Sprachcodierung mit einem Bruchteil von 64-kBit/s erfolgt und mindestens ein B-Kanal zwischen der Schnurlos-Netzabschlußeinheit und der Ortsvermittlungsstelle durch Zeitmultiplex in zwei oder mehrere Kanäle unterteilt ist und die Konvertierung des Übertragungscodes auf den Standard von 64-kBit/s in der Ortsvermittlungsstelle erfolgt und daß im Bedarfsfall je B-Kanal mehrere Verbindungen von Schnurlos-Netzabschlußeinheiten mit entsprechend reduzierter Übertragungsrate aufgebaut sind. Nach ETSI-Standard ist eine Übertragungsrate von 32-kBit/s für Schnurlos- oder Funktelefone möglich. Für besondere Anwendungen können aber beispielsweise auch acht Sprachkanäle zu je 16-kBit/s über die beiden B-Kanäle einer Leitung durchgeschaltet werden. Die Konvertierung des Übertragungscode kann beispielsweise bereits in der Teilnehmeranschlußbaugruppe erfolgen.

Insbesondere für berufliche Kommunikation mit unterschiedlichen Medien ist es vorteilhaft, daß ein Schnurlos-Teilnehmer über mehrere Sprach- und/oder Datenkanäle mit der Ortsvermittlungsstelle verbindbar ist. Der Datenaustausch im Funkkommunikationsnetz wird rationeller gestaltet, wenn die Schnurlos-Netzabschlußeinheit einen Gebührendatenspeicher enthält und die Gebührendaten mit Beendigung der Verbindung an die Datenverarbeitungsanlage des Dienst-Anbieters gesendet werden.

Zur Realisierung beispielweise des S-Busses im ISDN-Standard enthält die Schnurlos-Netzabschlußeinheit zusätzlich eine lokale Speisung und ist mit Zusatzfunktionen ausgestattet.

Die Erfindung wird anhand eines Ausführungsbeipieles mit Zeichnungen näher erläutert. Es zeigt:
Fig. 1 den schematischen Aufbau des Ausführungsbeispieles und
Fig. 2 ein Blockschaltbild einer Funknetzabschlußeinrichtung.

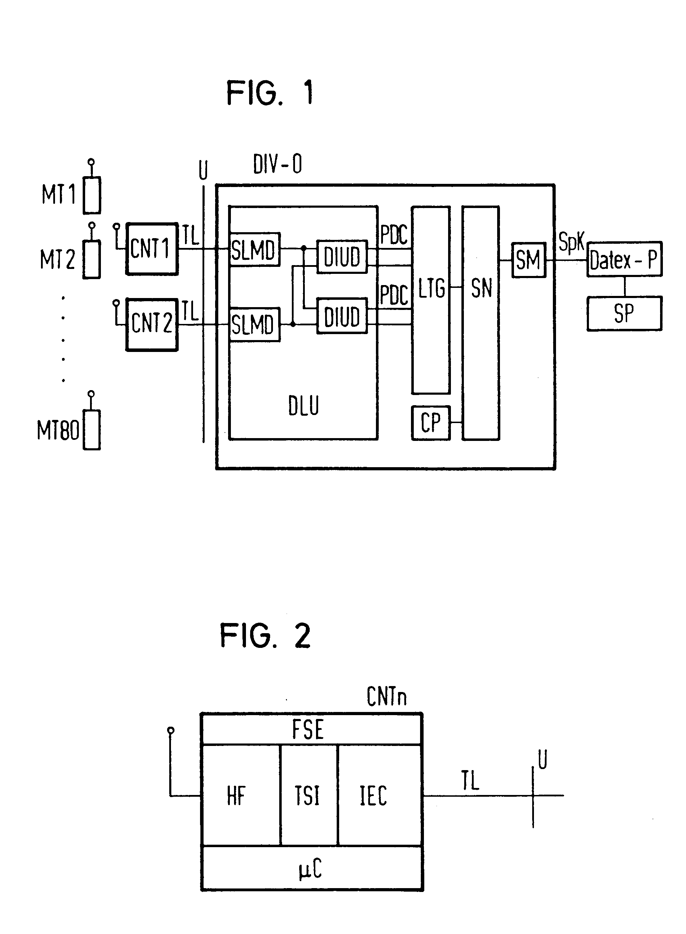

In Fig. 1 ist ein Funkkommunikationsnetz mit digitalen Ortsvermittlungsstellen DIV-O dargestellt. Für ISDN-Teilnehmeranschlüsse enthalten die Ortsvermittlungsstellen DIV-O digitale Teilnehmer-Leitungseinheiten DLU mit digitalen Teilnehmeranschlußbaugruppen SLMD. Die digitalen Teilnehmer-Leitungseinheiten DLU werden über Primär-Multiplexleitungen und Anschlußgruppen mit dem Koppelnetz der jeweiligen Ortsvermittlungsstelle DIV-O verbunden. Bei Bedarf können digitale Teilnehmer-Leitungseinheiten DLU auch analoge Teilnehmeranschlußbaugruppen enthalten. Ebenso können analoge Teilnehmer- und Verbindungsleitungen direkt mit einer Anschlußgruppe in die Ortsvermittlungsstellen DIV-O integriert sein. Ein Koordinationsprozessor steuert das Koppelnetz nach Steuerinformationen eines modifizierten Zentralkanal-Zeichengabeverfahrens Nr. 7.

Über U-Schnittstellen U und Teilnehmerleitungen TL sind digitale Schnurlos-Netzabschlußeinheiten CNTn mit den digitalen Teilnehmeranschlußgruppen SLMD verbunden. Mobilteile MTn werden von den Schnurlos-Teilnehmern als Telefonapparate verwendet, die Schnurlos-Netzabschlußeinheiten CNTn sind als Anschlußkästen an der Straße installiert. Kommt nun ein neuer Schnurlos-Teilnehmer hinzu, so müssen keine Leitungen mehr verlegt werden, da der Schnurlos-Teilnehmer lediglich einen Mobilteil MTn erhält. Die Aufnahme des neuen Anschlusses erfolgt über das Funkkommunikationsnetz.

Der Mobilteil MTn ist ähnlich dem Mobilteil eines Schnurlos-Telefones aufgebaut. Ein in der Schnurlos-Netzabschlußeinheit CNTn empfangenes, abgehendes Gespräch eines Schnurlos-Teilnehmers wird auf eine Übertragungsrate von 32-kBit/s umgesetzt. Über die Teilnehmerleitung TL werden nach ISDN-Standard zwei B-Kanäle und ein D-Kanal übertragen. Durch die Halbierung der Übertragungsrate ist es möglich, vier Sprachkanäle gleichzeitig an die Ortsvermittlungsstelle DIV-O zu senden.

Der D-Kanal unterteilt sich in einen s-Kanal für die Teilnehmersignalisierung und in einen p-Kanal für Paketdaten. Über diesen p-Kanal werden Daten der Teilnehmeridentifikation und für eine Berechtigungsprüfung als Betriebsdaten der Schnurlos-Netzabschlußeinheit CNTn übertragen. In der digitalen Teilnehmeranschlußgruppe SLMD werden die B-Kanäle weitergeleitet und der D-Kanal in den s-Kanal und p-Kanal aufgetrennt. Die p-Kanäle werden über eine digitale Schnittstelleneinheit der digitalen Teilnehmer-Leitungseinheit DLU zu einem Summe-p-Kanal im "basic access" zusammengefaßt. Dieser wird als 64-kBit/s-Nutzkanal über die Primär-Multiplexleitung, eine Anschlußgruppe und das Koppelnetz an ein Servicemodul der Ortsvermittlungsstelle DIV-O geleitet. Über dieses Servicemodul und einen Summendatenkanal SpK wird mittels "routing" der Summe-p-Kanal mit einem Paketvermittlungsnetz Datex-P verbunden. Über dieses Paketvermittlungsnetz Datex-P kann die Datenverarbeitungsanlage SP eines Dienst-Anbieters die im p-Kanal enthaltenen Daten verarbeiten und verwalten. Durch den Dienst-Anbieter kann so beispielsweise ein Telepoint- oder Personenruf-System aufgebaut und betrieben werden.

Die Schnurlos-Netzabschlußeinheit CNTn verwaltet 20 Mobilteile MTn nach DECT-Standard je Sprachkanal. Somit sind 80 Mobilteile MT1 - MT80 einer Schnurlos-Netzabschlußeinheit CNTn zugeordnet. Durch den Einbau von Mobilteilen MTn in Kommunikationsendgeräte können auch Telekopierer usw. über Funk an Gas Kommunikationsnetz angeschlossen werden.

In Fig. 2 ist der Aufbau der Schnurlos-Netzabschlußeinheit CNTn dargestellt. Sie enthält eine Fernspeiseeinrichtung FSE, einen Funkteil HF mit Kanalwahlsystem, eine Anpassungseinrichtung TSI (Time-Slot Interchanger) mit Hochfrequenz-Multiplexsteuerung (TDMA-verfahren) und einen Leitungsabschlußbaustein IEC. Der Leitungsabschlußbaustein IEC steuert die Umsetzung des Signalisierungsprotokolles und stellt eine Luftschnittstelle für den D-Kanal dar. Es werden die s-Daten generiert, die Gesprächsgebühren ermittelt und es können je nach Aufbau auch mehrere Gespräche gleichzeitig übertragen werden. Die Berechtigung eines Mobilteilnehmers wird über Authentifikation vom Dienst-Anbieter übermittelt und die Verbindung bei positivem Prüfergebnis durchgeschaltet. Ein Mikrocomputer µC setzt die Signalisierungsprotokolle der Teilnehmerleitung TL auf jene der Funkstrecke um und steuert den Funkteil HF. Durch die Fernspeiseeinrichtung FSE wird die Schnurlos-Netzabschlußeinheit CNTn mit 1 W über die Teilnehmerleitung TL von der Ortsvermittlungsstelle mit der zum Betrieb notwendigen Leistung versorgt.

## Patentansprüche

1. Funkkommunikationsnetz auf Basis digitaler Ortsvermittlungsstellen (DIV-O), die digitale Teilnehmer-Leitungseinheiten (DLU) mit digitalen Teilnehmeranschlußbaugruppen (SLMD) enthalten, an die Teilnehmerleitungen (TL) mit teilnehmerseitigen Netzabschlußeinheiten angeschlossen sind, wobei jede Netzabschlußeinheit mit einer Teilnehmeranschlußbaugruppe (SLMD) über die Teilnehmerleitung (TL) mit einem Datenkanal verbunden ist und die Datenkanäle in der Ortsvermittlungsstelle (DIV-O) auf einen oder mehrere Summendatenkanäle (SpK) konzentriert sind, wobei die Summendatenkanäle (SpK) über ein Datennetz mit einer Datenverarbeitungsanlage (SP) eines Dienst-Anbieters verbunden sind, **dadurch gekennzeichnet,** daß Netzabschlußeinheiten als Schnurlos-Netzabschlußeinheiten (CNTn) einen Funkteil (HF) enthalten und eine Schnurlos-Netzabschlußeinheit (CNTn) derart beschaffen ist, daß eine Fernspeisung über die Teilnehmerleitung (TL) von der Ortsvermittlungsstelle (DIV-O) her erfolgt,
daß mehrere Schnurlos-Teilnehmer einer Schnurlos-Netzabschlußeinheit (CNTn) zugeordnet sind,
daß durch die Datenverarbeitungsanlage (SP) des Dienst-Anbieters mit entsprechender Datenbasis Prüfmittel der Nutzungsberechtigung des Schnurlos-Teilnehmers vor dem Durchschalten einer abgehenden Verbindung vorgesehen sind und
Mittel zur Übertragung der jeweiligen Rufnummer des SchnurlosTeilnehmers bei ankommender Verbindung von der Ortsvermittlungsstelle (DIV-O) über den jeweiligen Datenkanal zur Schnurlos-Netzabschlußeinheit (CNTn) und zum Ruf des Schnurlos-Teilnehmers über Funk vorhanden sind,
daß zwischen der Schnurlos-Netzabschlußeinheit (CNTn) und der Ortsvermittlungsstelle (DIV-O) mehrere Sprachkanäle gleichzeitig schaltbar sind und
daß Mittel zum Austausch administrativer Daten zwischen der Schnurlos-Netzabschlußeinheit (CNTn) und der Datenverarbeitungsanlage (SP) des Dienst-Anbieters vorhanden sind.

2. Funkkommunikationsnetz nach Anspruch 1, **dadurch gekennzeichnet,** daß in der Ortsvermittlungsstelle (DIV-O) mehrere Schnurlos-Teilnehmer einer Schnurlos-Netzabschlußeinheit (CNTn) fest zugeordnet sind.

3. Funkkommunikationsnetz nach Anspruch 1 oder 2, **dadurch gekennzeichnet,** daß in der Ortsvermittlungsstelle (DIV-O) ein Sammelanschluß für mehrere Schnurlos-Netzabschlußeinheiten (CNTn) eingerichtet ist.

4. Funkkommunikationsnetz nach einem der vorherigen Ansprüche, **dadurch gekennzeichnet,** daß die Datenverarbeitungsanlage (SP) des Dienst-Anbieters in die Ortsvermittlungsstelle (DIV-O) integriert ist.

5. Funkkommunikationsnetz nach einem der vorherigen Ansprüche, **dadurch gekennzeichnet,** daß in der Ortsvermittlungsstelle (DIV-O) Mittel zur Anrufumleitung vorhanden sind, die für jene Schnurlos-Teilnehmer aktiviert sind, die sich im Funkbereich einer anderen Schnurlos-Netzabschlußeinheit (CNTn) befinden.

6. Funkkommunikationsnetz nach Anspruch 5, **dadurch gekennzeichnet,** daß für einen Schnurlos-Teilnehmer ein Mobilteil (MTn) und ein Drahtanschluß vorhanden sind und daß in der Ortsvermittlungsstelle (DIV-O) eine automatische Anrufumleitung vom Drahtanschluß zum Mobilteil (MTn) erfolgt, wenn sich der Teilnehmer am Drahtanschluß nicht meldet oder die Anrufumleitung aktiviert ist.

7. Funkkommunikationsnetz nach Anspruch 5 oder 6, **dadurch gekennzeichnet,** daß der Mobilteil (MTn) einen Schaltgeber für die automatische Anrufumleitung beim Wechsel in den Funkbereich einer anderen Schnurlos-Netzabschlußeinheit (CNTn) enthält.

8. Funkkommunikationsnetz nach einem der vorherigen Ansprüche, **dadurch gekennzeichnet,** daß die Schnurlos-Netzabschlußeinheit (CNTn) den Funkteil (HF), eine Anpassungseinrichtung (TSI) mit Hochfrequenz-Multiplexsteuerung, einen Leitungsabschlußbaustein (IEC), einen Mikrocomputer (µC) und eine Fernspeiseeinrichtung (FSE) enthält.

9. Funkkommunikationsnetz nach einem der vorherigen Ansprüche, **dadurch gekennzeichnet,** daß der Funkteil (HF) mit einer Zeit- und/oder Frequenzmultiplexeinrichtung aufgebaut ist.

10. Funkkommunikationsnetz nach einem der vorherigen Ansprüche, **dadurch gekennzeichnet,** daß die Schnurlos-Netzabschlußeinheit (CNTn) als Gemeinschaftsanschluß ausgebildet ist.

11. Funkkommunikationsnetz nach einem der vorherigen Ansprüche, **dadurch gekennzeichnet,** daß das Netz als integriertes Netz nach dem ISDN-Standard aufgebaut ist, daß die Schnurlos-Netzabschlußeinheit (CNTn) über eine U-Schnittstelle (U) mit der digitalen Teilnehmeranschlußbaugruppe (SLMD) und zur Übertragung der Betriebsdaten bzw. der Berechtigung als p-Daten über einen D-Kanal mit der Teilnehmer-Leitungseinheit (DLU) verbunden ist und daß die Datenverarbeitungsanlage (SP) des Dienst-Anbieters über den Summendatenkanal (SpK) eines Paketvermittlungsnetzes (Datex-P) mit der Ortsvermittlungsstelle (DIV-O) verbunden ist.

12. Funkkommunikationsnetz nach Anspruch 11, **dadurch gekennzeichnet,** daß auf der Funkstrecke die Sprachcodierung mit einem Bruchteil von 64-kBit/s erfolgt und mindestens ein B-Kanal zwischen der Schnurlos-Netzabschlußeinheit (CNTn) und der Ortsvermittlungsstelle (DIV-O) durch Zeitmultiplex in zwei oder mehrere Kanäle unterteilt ist und die Konvertierung des Übertragungscodes auf den Standard von 64-kBit/s in der Ortsvermittlungsstelle (DIV-O) erfolgt und daß im Bedarfsfall je B-Kanal mehrere Verbindungen von Schnurlos-Netzabschlußeinheiten (CNTn) mit entsprechend reduzierter Übertragungsrate aufgebaut sind.

13. Funkkommunikationsnetz nach Anspruch 12, **dadurch gekennzeichnet,** daß ein Schnurlos-Teilnehmer über mehrere Sprach- und/oder Datenkanäle mit der Ortsvermittlungsstelle (DIV-O) verbunden ist.

14. Funkkommunikationsnetz nach einem der vorherigen Ansprüche, **dadurch gekennzeichnet,** daß die Schnurlos-Netzabschlußeinheit (CNTn) einen Gebührendatenspeicher enthält, durch den die Gebührendaten mit Beendigung der Verbindung an die Datenverarbeitungsanlage (SP) des Dienst-Anbieters gesendet werden.

15. Funkkommunikationsnetz nach einem der vorherigen Ansprüche, **dadurch gekennzeichnet,** daß die Schnurlos-Netzabschlußeinheit (CNTn) zusätzliche eine lokale Speisung enthält und mit Zusatzfunktionen ausgestattet ist.

## Claims

1. Radiocommunication network based on digital local exchanges DIV-O. which contain digital subscriber line units (DLU) with digital subscriber line modules (SLMD), to which subscriber lines (TL) with network terminating units at the subscriber end are connected, each network terminating unit being connected to a subscriber line module (SLMD) via the subscriber line (TL) by means of a data channel and the data channels being concentrated to one or more composite data channels (SpK) in the local exchange (DIV-O), the composite data channels (SpK) being connected to a data processing system (SP) of a service provider via a data network, wherein network terminating units, as cordless network terminating units (CNTn), contain a radio section (HF), and a cordless network terminating unit (CNTn) is designed in such a manner that remote power feeding occurs via the subscriber line (TL) from the local exchange (DIV-O),
several cordless subscribers are allocated to one cordless network terminating unit (CNTn),
the data processing system (SP) of the service provider, having the appropriate data base, provides means for checking the utilization authority of the cordless subscriber before an outgoing connection is switched through and
means for transmitting the respective directory number of the cordless subscriber, in the case of an incoming connection, from the local exchange (DIV-O) via the respective data channel to the cordless network terminating unit (CNTn) and for calling the cordless subscriber by radio, several voice channels can be switched at the same time between the cordless network terminating unit (CNTn) and the local exchange (DIV-O), and
means for exchanging administrative data between the cordless network terminating unit (CNTn) and the data processing system (SP) of the service provider are provided.

2. Radiocommunication network as claimed in claim 1, wherein several cordless subscribers are permanently allocated to one cordless network terminating unit (CNTn) in the local exchange (DIV-O).

3. Radiocommunication network as claimed in claim 1 or 2, wherein a collective line is set up for several cordless network terminating units (CNTn) in the local exchange (DIV-O).

4. Radiocommunication network as claimed in one of the preceding claims, wherein the data processing system (SP) of the service provider is integrated in the local exchange (DIV-O).

5. Radiocommunication network as claimed in one of the preceding claims, wherein means for call diversion are provided in the local exchange (DIV-O), which means are activated for those cordless subscribers which are located within the radio zone of a different cordless network terminating unit (CNTn).

6. Radiocommunication network as claimed in claim 5, wherein a mobile section (MTn) and a wire line exist for a cordless subscriber, and in the local exchange (DIV-O) the call is automatically diverted from the wire line to the mobile section (MTn) when the subscriber does not respond at the wire line or the call diversion facility is activated.

7. Radiocommunication network as claimed in claim 5 or 6, wherein the mobile section (MTn) contains a switching function transmitter for the automatic call diversion during the hand-over into the radio zone of a different cordless network terminating unit (CNTn).

8. Radiocommunication network as claimed in one of the preceding claims, wherein the cordless network terminating unit (CNTn) contains the radio section (HF) an adaptor device (TSI) with radio-frequency multiplex control, a line terminating chip (IEC), a microcomputer (µC) and a remote power-feeding device (FSE).

9. Radiocommunication network as claimed in one of the preceding claims, wherein the radio section (HF) is configured with a time- and/or frequency-division multiplex device.

10. Radiocommunication network as claimed in one of the preceding claims, wherein the cordless network terminating unit (CNTn) is designed as a party line.

11. Radiocommunication network as claimed in one of the preceding claims, wherein the network is configured as integrated network in accordance with the ISDN standard, the cordless network terminating unit (CNTn) is connected to the digital subscriber line module (SLMD) via a U interface (U) and to the subscriber line unit (DLU) via a D channel for transmitting the service data or the authorization as p data, and the data processing system (SP) of the service provider is connected to the local exchange (DIV-O) via the composite data channel (SpK) of a packet switching network (Datex-P).

12. Radiocommunication network as claimed in claim 11, wherein the voice coding on the radio link is done at a fraction of 64-kBit/s and at least one B channel between the cordless network terminating unit (CNTn) and the local exchange (DIV-O) is subdivided into two or more channels by time-division multiplex and the transmission code is converted to the standard of 64-kBit/s in the local exchange (DIV-O) and, if necessary, several connections are set up with correspondingly reduced transmission rate by cordless network terminating units (CNTn).

13. Radiocommunication network as claimed in claim 12, wherein one cordless subscriber can be connected to the local exchange (DIV-O) via several voice and/data channels.

14. Radiocommunication network as claimed in one of the preceding claims, wherein the cordless network terminating unit (CNTn) contains a call-charge data memory and the call-charge data are transmitted to the data processing system (SP) of the service provider when the call is finished.

15. Radiocommunication network as claimed in one of the preceding claims, wherein the cordless network terminating unit (CNTn) additionally contains local power feeding and is equipped with supplementary functions.

## Revendications

1. Réseau de radiocommunication se basant sur des centraux (DIV-0) locaux, qui comprend des unités (DLU) de lignes d'abonnés ayant des modules (SLMD) numériques de raccordement d'abonnés, auxquels sont connectées les lignes (TL) d'abonnés comportant, côté sortie, des unités terminales de réseau, chaque unité terminale de réseau étant reliée à un module (SLMD) de raccordement d'abonnés par l'intermédiaire de la ligne (TL) d'abonné par un canal de données et les canaux de données dans le central (DIV-0) local étant concentrés sur un ou plusieurs canaux (SpK) de données de somme, les canaux (SpK) de données de somme étant reliés par l'intermédiaire d'un réseau de données avec une installation (SP) de traitement de données d'un prestataire de service, caractérisé en ce que des unités terminales de réseau ont, comme unités (CNTn) terminales de réseau sans fil, une partie (HF) radio et une unité (CNTn) terminale de réseau sans fil est formée, de sorte qu'une téléalimentation s'effectue par l'intermédiaire de la ligne (TL) d'abonné à partir du central (DIV-0) local,
plusieurs abonnés à appareil sans fil sont associés à une unité (CNTn) terminale de réseau sans fil,
des moyens, avec base de données correspondante, pour contrôler l'autorisation d'utilisation par l'abonné à appareil sans fil, avant que ne soit établie une liaison de départ, sont prévus par l'installation (SP) de traitement de données du prestataire de service, et
des moyens pour transmettre le numéro d'appel respectif de l'abonné à appareil sans fil lors d'une connexion arrivant du central (DIV-0) local par le canal de données respectif à l'unité (CNTn) terminale de réseau, et pour appeler par radio l'abonné à appareil sans fil, sont disponibles,
plusieurs canaux vocaux peuvent être utilisés en même temps entre l'unité (CNTn) terminale de réseau sans fil et le central (DIV-0) local et
des moyens pour échanger des données administratives entre l'unité terminale de réseau sans fil et l'installation (SP) de traitement de données du prestataire de service sont disponibles.

2. Réseau de radiocommunication suivant la revendication 1, caractérisé en ce que plusieurs abonnés à appareil sans fil d'une unité (CNTn) terminale de réseau sans fil sont associés de façon fixe dans le central (DIV-0) local.

3. Réseau de radiocommunication suivant la revendication 1 ou 2, caractérisé en ce qu'un raccordement collectif pour plusieurs unités (CNTn) terminales de réseau sans fil est installé dans le central (DIV-0) local.

4. Réseau de radiocommunication suivant l'une des revendications précédentes, caractérisé en ce que l'installation (SP) de traitement de données du prestataire de service est intégrée dans le central (DIV-0) local.

5. Réseau de radiocommunication suivant l'une des revendications précédentes, caractérisé en ce que des moyens de transfert d'appel sont disponibles dans le central (DIV-0) local, qui sont activés pour celui des abonnés à appareil sans fil, qui se trouve dans la zone couverte par radio d'une autre unité (CNTn) terminale de réseau sans fil.

6. Réseau de radiocommunication suivant la revendication 5, caractérisé en ce qu'un abonné à appareil sans fil dispose d'une partie (MTn) mobile et d'un raccordement de fil et un transfert d'appel est effectué automatiquement du raccordement de fil à la partie (MTn) mobile dans le central (DIV-0) local, lorsque l'abonné ne se signale pas sur le raccordement de fil ou lorsque le transfert d'appel est activé.

7. Réseau de radiocommunication suivant la revendication 5 ou 6, caractérisé en ce que la partie (MTn) mobile comprend un commutateur pour le transfert automatique d'appel, lorsque l'on passe dans la zone couverte par radio d'une autre unité (CNTn) terminale de réseau sans fil.

8. Réseau de radiocommunication suivant l'une des revendications précédentes, caractérisé en ce que l'unité (CNTn) terminale de réseau sans fil comporte la partie (HF) radio, une installation (TSI) d'adaptation à commande multiplexée haute fréquence, un composant (IEC) terminal de ligne, un microordinateur (µC) et une installation (FSE) de téléalimentation.

9. Réseau de radiocommunication suivant l'une des revendications précédentes, caractérisé en ce que la partie (HF) radio est formée d'une installation de multiplexage en temps et/ou en fréquence.

10. Réseau de radiocommunication suivant l'une des revendications précédentes, caractérisé en ce que l'unité (CNTn) terminale de réseau sans fil a la forme d'un raccordement collectif.

11. Réseau de radiocommunication suivant l'une des revendications précédentes, caractérisé en ce que le réseau a la structure de réseau intégré suivant la norme RNIS, l'unité (CNTn) terminale de réseau sans fil est reliée par l'intermédiaire d'une interface U (U) au module (SLMD) terminal numérique d'abonné et par l'intermédiaire d'un canal D, pour transmettre les données opératoires ou l'autorisation en tant que données p, à l'unité (DLU) de lignes d'abonné et l'installation (SP) de traitement de données du prestataire de service est reliée par l'intermédiaire d'un canal (SpK) de données de somme d'un réseau (Datex-P) de commutation par paquets au central (DIV-0) local.

12. Réseau de radiocommunication suivant la revendication 11, caractérisé en ce que le codage vocal s'effectue sur la liaison radio à une fraction de 64 kBits/s, au moins un canal B entre l'unité (CNTn) terminale de réseau sans fil et le central (DIV-0) local est divisé par multiplexage temporel en deux ou plusieurs canaux, la conversion du code de transmission s'effectue dans le central (DIV-0) local suivant la norme de 64 kBits/s et plusieurs connexions d'unités (CNTn) terminales de réseau sans fil sont formées en cas de besoin pour chaque canal B avec une vitesse de transmission réduite de façon correspondante.

13. Réseau de radiocommunication suivant la revendication 12, caractérisé en ce qu'un abonné à appareil sans fil est relié par l'intermédiaire de plusieurs canaux vocaux et/ou de données au central (DIV-0) local.

14. Réseau de radiocommunication suivant l'une des revendications précédentes, caractérisé en ce que l'unité (CNTn) terminale de réseau sans fil comprend une mémoire de données de taxation, par laquelle les données de taxation sont envoyées à l'installation (SP) de traitement de données du prestataire de service à la fin de la connexion.

15. Réseau de radiocommunication suivant l'une des revendications précédentes, caractérisé en ce que l'unité (CNTn) terminale de réseau sans fil comprend en plus une alimentation locale et est munie de fonctions supplémentaires.
